# FASCICULE DE BREVET EUROPEEN

(11) **EP 2 957 019 B1**
(45) Date de publication et mention de la délivrance du brevet: **08.07.2020**
(21) Numéro de dépôt: 14707246.6
(22) Date de dépôt: 13.02.2014
(51) Int. Cl.: H02K 1/27, H02K 15/03

(54) **MACHINE ELECTRIQUE TOURNANTE AUX AIMANTS PERMANENTS INTÉGRÉS**
ROTIERENDE ELEKTRISCHE MASCHINE MIT EINGELASSENEN PERMANENTMAGNETEN
ROTATING ELECTRIC MACHINE COMPRISING EMBEDDED PERMANENT MAGNETS

(30) Priorité: 14.02.2013 FR 1351276
(43) Date de publication de la demande: 23.12.2015
(73) Titulaire: Moteurs Leroy-Somer, 16915 Angouleme Cedex 9 (FR)
(72) Inventeur: KOECHLIN, Samuel, F-16000 Angouleme (FR)
(74) Mandataire: Nony
(86) Numéro de dépôt international: PCT/IB2014/058971
(87) Numéro de publication internationale: WO 2014/125433

(56) Documents cités:
- DE-A1- 4 423 840
- DE-A1-102010 039 334
- US-A- 4 434 546
- US-A- 5 063 318

## Description

La présente invention concerne les machines électriques tournantes et notamment celles comportant un rotor ou un stator à aimants permanents notamment à concentration de flux, et plus particulièrement les rotors ou les stators de telles machines.

Le rotor ou le stator est, de manière connue, composé d'une masse magnétique dans laquelle sont insérés des aimants permanents. Ces derniers peuvent être disposés en surface, faisant directement face à l'entrefer ou, en variante, être disposés à l'intérieur de la masse magnétique, étant alors dits « *enterrés ».*

Afin d'optimiser le coût et la performance des machines électriques, il peut être nécessaire d'augmenter la quantité des aimants, notamment lorsqu'il n'est pas possible d'améliorer leur qualité ou de conserver les mêmes performances avec des aimants de moindre qualité.

Une performance électromagnétique optimale est obtenue lorsqu'un aimant enterré est en contact parfait, sur chacune de ses deux faces polaires, avec la masse magnétique dans laquelle il est inséré. Le passage du flux magnétique des aimants vers la masse magnétique est ainsi optimisé. Par « *face polaire* » d'un aimant, on entend une face de l'aimant qui est aimantée avec une polarité identique, formant ainsi le pôle Nord ou Sud de l'aimant.

Cependant, il existe en général un jeu entre les aimants et la masse magnétique dans laquelle ils sont insérés, constituant ainsi un entrefer du point de vue magnétique, qui induit nécessairement des pertes dans les performances électromagnétiques de la machine. Un tel jeu peut être lié aux contraintes de fabrication qui ne permettent pas, pour des coûts raisonnables, de respecter des dimensions très précises dans le découpage de la masse magnétique ou dans la fabrication des aimants. Un jeu peut également être présent car, les aimants étant sensibles à la corrosion, il peut être nécessaire de les recouvrir d'un revêtement protecteur induisant également une incertitude sur leurs dimensions.

En outre, les contraintes de montage nécessitent de conserver un certain jeu entre les aimants et la masse magnétique, de manière à faciliter l'insertion des aimants dans cette dernière, notamment lorsque la masse magnétique est formée d'un empilement de tôles magnétiques minces. En effet, dans ce cas, les parois de la masse magnétique peuvent ne pas être parfaitement rectilignes compte tenu du fait qu'elles sont constituées d'un empilement de tôles minces, ce qui peut nécessiter un jeu de montage encore plus important. On peut avoir de manière classique un intervalle de tolérance de 0,2 mm dans les dimensions des aimants, de sorte qu'il peut être nécessaire de prévoir un jeu minimal de 0,1 mm de part et d'autre des aimants pour le montage, en plus de la tolérance due à la conception de la masse magnétique. Au final, on peut obtenir par exemple, de manière classique, un jeu de l'ordre de 0,25 mm par aimant. Les entrefers entre rotor et stator couramment utilisés sur les machines électriques de faible à moyenne puissance peuvent être de l'ordre de 0,5 mm à 1 mm.

Dans le cas où la machine comporte plusieurs aimants disposés en plusieurs rangées par pôle dans la masse magnétique, les jeux des aimants des différentes rangées s'additionnent et affaiblissent d'autant les performances magnétiques de la machine.

Il existe donc un besoin pour minimiser les jeux entre les aimants et la masse magnétique qui les reçoit, de manière à améliorer les performances magnétiques des machines électriques tournantes.

L'invention a ainsi pour objet, selon l'un de ses aspects, une machine électrique tournante, comportant :
- une masse magnétique, notamment rotorique, comportant des premiers logements,
- une pluralité d'aimants permanents insérés dans les premiers logements, chaque aimant permanent comportant deux faces polaires, et
- des cales, notamment amagnétiques, insérées dans les premiers logements et/ou dans des seconds logements ménagés dans la masse magnétique,
les cales étant configurées pour provoquer une déformation des premiers logements diminuant l'entrefer parasite entre au moins une face polaire d'un aimant permanent et une paroi correspondante d'un premier logement, la masse magnétique comportant des ponts de matière ménagés entre deux logements consécutifs dans une rangée de logements, les cales venant au contact de ces ponts de matière, au moins un pont de matière étant de forme générale incurvée.

Par « *premier logement* », on entend un logement dans lequel est inséré au moins un aimant permanent. Comme on le verra plus loin, un premier logement peut être dépourvu de cales ou en comporter, par exemple une ou deux.

Par « *second logement* », on entend un logement dépourvu d'aimant permanent. Comme on le verra plus loin, un second logement comporte des cales par exemple une ou deux.

Par "troisième logement", on entend un logement dépourvu d'aimant permanent et de cale.

Les cales reçues dans les logements de la masse magnétique, que ce soit dans les premiers ou les seconds logements, provoquent la déformation des premiers logements qui reçoivent les aimants.

La masse magnétique est de préférence réalisée dans un matériau très déformable, de manière courante du fer doux, qui peut s'adapter facilement par déformation plastique pour épouser la forme de l'aimant et/ou des cales reçues dans le logement correspondant.

A titre d'exemple, une incurvation de 1 mm sur une longueur de 10 mm peut permettre un rapprochement de 0,25 mm environ des parois du logement vers l'aimant correspondant, ce qui équivaut sensiblement à l'ordre de grandeur mentionné ci-dessus de l'entrefer parasite présent dans les machines connues entre la masse magnétique et l'aimant.

Ainsi, dans l'invention, on obtient grâce à la présence des cales une déformation des premiers logements, notamment une déformation plastique, au moins pour permettre le rapprochement, voire la mise en contact, des parois des premiers logements avec les pôles des aimants correspondants. La déformation des tôles peut avoir lieu dans leur plan, de préférence dans un plan perpendiculaire à l'axe de rotation de la machine.

La masse magnétique peut être formée d'un empilement de tôles magnétiques, de préférence des tôles magnétiques monoblocs, ou d'une ou plusieurs tôle(s) individuelle(s) enroulée(s) sur elle(s)-même(s) autour de l'axe de rotation. Chaque couche de tôle de la masse magnétique peut être d'un seul tenant. La masse magnétique peut être dépourvue de pièces polaires individuelles.

La masse magnétique peut être une masse rotorique, ou en variante une masse statorique. Le rotor peut comporter un nombre de pôles compris entre deux et douze, mieux entre quatre et huit.

Les aimants permanents peuvent être réalisés en ferrites ou avec des terres rares ou avec tout autre type de matériau magnétique. La disposition des logements permet de concentrer le flux des aimants et d'obtenir avec des aimants en ferrites des performances intéressantes.

Les cales peuvent déformer les logements lors de leur insertion dans la masse magnétique, par un effet de coin. Le cas échéant, la déformation des logements intervient après une action d'expansion des cales, par exemple lorsque celles-ci sont constituées par des rivets.

Les cales peuvent être réalisées dans un matériau amagnétique, par exemple un acier amagnétique, de manière à ne pas parasiter le circuit du flux magnétique dans la masse magnétique.

Les cales peuvent avoir, en section transversale, une forme qui peut être choisie dans la liste suivante, non limitative : trapézoïdale, circulaire, en forme de D.

Une cale comporte de préférence une portion dont la section varie progressivement lorsque l'on se déplace le long de son axe longitudinal, de manière à favoriser son insertion dans le logement. Elle peut par exemple comporter une portion dont la section est constante, s'étendant par exemple sur une majeure partie de sa longueur, et un embout dont la section varie progressivement, cet embout pouvant par exemple être découpé une fois la cale complètement insérée dans la masse magnétique.

Les cales peuvent être insérées dans les premiers logements, et venir en appui contre les aimants. Le risque d'endommager l'aimant correspondant, lorsque celui-ci est en ferrite, est minimisé par le fait que la résistance à la compression des aimants en ferrite est excellente, par exemple de l'ordre de 900 MPa, en particulier dans le cas où l'appui est uniforme.

Les cales sont insérées dans la masse magnétique de préférence parallèlement à l'axe de rotation de la machine.

L'insertion des cales dans les premiers logements permet également d'améliorer ou d'effectuer le calage des aimants permanents dans leur logement. On évite ainsi d'avoir à coller ceux-ci, soit au moyen d'une colle, soit au moyen d'un vernis d'imprégnation, ou de les caler d'une autre manière pour empêcher qu'ils ne bougent dans leur logement.

Dans ce cas également, les cales sont de préférence en forme de D, le grand côté du D correspondant à la face de la cale venant en contact avec l'aimant permanent. Un contact sur une surface large permet de minimiser le risque d'endommager l'aimant lors de l'insertion de la cale ou ultérieurement lors de l'utilisation de la machine. La ou les cales associées à un aimant peuvent être insérées le long d'une face de l'aimant perpendiculaire aux faces polaires de ce dernier.

Deux cales peuvent par exemple être insérées chacune de part et d'autre d'un aimant dans un premier logement logeant cet aimant. Les cales sont insérées le long de faces de l'aimant qui sont de préférence perpendiculaires aux faces polaires de ce dernier.

En variante ou additionnellement, des cales sont insérées dans des seconds logements dépourvus d'aimants permanents. Ces cales sont de préférence de section transversale effilée, autrement dit en forme de coin, par exemple trapézoïdale, ou circulaire, ou en forme de D.

Des cales sont insérées dans des seconds logements disposés entre deux premiers logements consécutifs dans une rangée de logements, des aimants permanents étant insérés dans au moins l'un de ces premiers logements, voire dans les deux logements consécutifs.

La machine électrique peut être dépourvue de seconds et troisièmes logements et ne peut comporter que des premiers logements dans lesquels sont insérés des aimants permanents. Des cales peuvent être insérées dans certains ou dans tous les premiers logements.

Au total, la masse magnétique peut comporter des aimants permanents insérés dans tout ou partie des premiers logements, par exemple dans au moins la moitié des premiers logements, voire dans plus des deux tiers des premiers logements, mieux encore dans tous les premiers logements.

Les aimants sont disposés dans les premiers logements de manière à définir des pôles du rotor. Les logements peuvent être disposés en forme d'arc de cercle ou de V, en étant par exemple disposés symétriquement par rapport à un axe radial du pôle correspondant. Par « *axe radial du pôle* », on entend un axe du pôle orienté radialement, c'est-à-dire selon un rayon de la masse magnétique. Il peut s'agir d'un axe de symétrie pour le pôle. Cet axe radial peut intersecter le sommet du pôle.

Les logements peuvent être disposés en rangées de logements de manière à définir les pôles de la masse magnétique. Chaque pôle peut comporter au moins trois logements.

Les logements peuvent être disposés en une ou plusieurs rangées par pôle. Chaque pôle peut comporter au moins deux rangées, voire au moins trois rangées. Les logements peuvent être de forme allongée et comporter chacun deux petits côtés et deux grands côtés. Les grands côtés peuvent former les parois des logements destinées à entrer en contact avec les faces polaires des aimants permanents sous l'effet des cales. Une rangée peut comporter au moins deux, mieux au moins trois logements disposés consécutivement, leurs petits côtés définissant entre deux logements consécutifs d'une même rangée un pont de matière.

La masse magnétique comporte des ponts de matière ménagés entre deux logements consécutifs dans une rangée de logements, afin d'améliorer la cohésion de la machine à l'encontre des efforts centrifuges. Les ponts de matière peuvent être orientés radialement.

Des ponts de matière peuvent être ménagés entre deux premiers logements dans lesquels sont insérés des aimants permanents, et/ou entre un premier logement et un second logement et/ou un troisième logement et/ou encore entre un de ces logements et l'entrefer de la machine ménagé entre le stator et le rotor.

Au moins un pont de matière est de forme générale incurvée. Un pont de matière de forme incurvé peut notamment être ménagé entre un premier logement dans lequel est inséré un aimant permanent et un second logement dépourvu d'aimant permanent ou un troisième logement dépourvu d'aimant permanent et de cale. La forme incurvée des ponts de matière permet de bénéficier d'une diminution suffisante du jeu entre la masse magnétique et les aimants, sans déformation excessive des ponts.

De préférence, toutes les cales d'une même série de logements consécutifs sont insérées de manière simultanée, de manière à favoriser une insertion aisée.

En outre, la masse magnétique peut présenter une section transversale de forme extérieure circulaire, ou en variante de forme générale circulaire comportant en outre des découpes au niveau des logements, lesquelles aident à compenser la déformation des logements et celle des éventuels ponts entre les logements.

L'invention permet en outre de rigidifier les ponts de matière par la flexion que les cales provoquent sur ces derniers, qui, en introduisant une précontrainte radiale dans le rotor, permet de diminuer son gonflement sous l'effet de la force centrifuge lors de son utilisation et peut permettre ainsi de garantir, y compris à haute vitesse, une valeur constante de l'entrefer.

La masse magnétique peut présenter à sa périphérie des découpes délimitées au moins partiellement par des ponts de matière venant au contact de cales.

La machine peut comporter des troisièmes logements vides d'aimants et de cales, disposés entre deux logements consécutifs recevant des aimants, les troisièmes logements étant de préférence délimités au moins partiellement par deux ponts de matière opposés, chacun en contact avec une cale.

La machine peut comporter des premiers logements recevant des aimants et des cales et des seconds logements recevant des cales uniquement, ces seconds logements étant délimités au moins partiellement par des ponts de matière définissant au moins partiellement le contour extérieur de la masse magnétique, des troisièmes logements sans cales ni aimants étant disposés entre les premiers logements avec aimants et cales et les seconds logements avec cales uniquement.

La masse magnétique peut présenter des logements recevant des cales, ces logements étant délimités au moins partiellement par des ponts de matière adjacents l'un à l'entrefer et l'autre à un logement vide d'aimant. La présence de telles cales peut être utile pour garantir une déformation homogène de la périphérie de la masse rotorique. Ces cales présentent de préférence une section ovoïde, seules ou lorsque regroupées par paires au sein d'un même logement.

Dans un exemple de réalisation, les logements d'une même rangée sont disposés selon une branche centrale et deux branches latérales situées de part et d'autre de la branche centrale, donnant par exemple une configuration en U, la branche centrale étant par exemple seule à comporter un ou plusieurs aimants permanents, les branches latérales ne logeant pas d'aimant permanent.

Pour un même pôle, les logements de ce pôle peuvent être disposés en une seule rangée. La concavité de la rangée peut être orientée vers le sommet du pôle, c'est à dire vers l'entrefer.

De préférence, pour un même pôle, les logements de ce pôle sont disposés en plusieurs rangées, chacune de concavité qui peut être orientée vers le sommet du pôle, notamment en rangées sensiblement concentriques. Par « *concentriques* », on entend que des axes médians des logements des rangées, pris dans un plan perpendiculaire à l'axe de rotation du rotor, se coupent en un même point. Cette disposition en plusieurs rangées concentriques permet d'améliorer la concentration du flux sans nécessairement avoir à augmenter la taille des logements ou la quantité d'aimants permanents nécessaire pour obtenir un flux équivalent. Le nombre de rangées par pôle peut notamment être de deux, trois ou quatre.

La disposition des logements et/ou des ponts de matière dans une rangée est de préférence symétrique par rapport à l'axe radial du pôle.

Dans une rangée, les logements peuvent être disposés en V ou en U, le U pouvant avoir une forme évasée vers l'entrefer. Autrement dit, les logements constituant les branches latérales du U peuvent être non parallèles entre eux. Lorsque les premiers logements d'une même rangée sont disposés selon un arrangement en forme de U, le premier logement central peut être de longueur supérieure ou inférieure à celle d'une branche du U. Dans un exemple de réalisation, les branches du U sont plus courtes que la branche centrale constituant le fond du U.

Les premiers logements peuvent s'étendre chacun, lorsqu'observés en section dans un plan perpendiculaire à l'axe de rotation du rotor, selon un axe longitudinal qui peut être rectiligne ou courbe.

Les premiers logements peuvent avoir une largeur constante ou variable lorsque l'on se déplace le long de leur axe longitudinal, dans un plan perpendiculaire à l'axe de rotation du rotor.

Les petits côtés d'un premier logement sont par exemple orientés en direction de l'axe radial du pôle lorsque l'on se déplace en éloignement de l'axe de rotation, et convergent par exemple sensiblement vers le sommet du pôle.

Les premiers logements peuvent avoir, en section transversale, c'est-à-dire perpendiculairement à l'axe de rotation, une forme générale rectangulaire ou trapézoïdale, cette liste n'étant pas limitative.

Les petits côtés d'un premier logement peuvent être perpendiculaires aux grands côtés dudit premier logement. Les petits côtés d'un premier logement peuvent être inclinés par rapport aux grands côtés dudit premier logement.

Au moins un premier logement peut avoir deux grands côtés, l'un des grands côtés étant plus petit que l'autre. Dans ce cas, par exemple lorsque le premier logement est de forme générale trapézoïdale, le plus court des grands côtés peut être situé plus près de l'entrefer que le plus long des grands côtés.

Les petits côtés d'un logement peuvent être rectilignes ou courbes.

Les aimants permanents peuvent être de forme générale rectangulaire. Compte-tenu de la forme des logements, la mise en place des aimants dans les logements peut laisser un espace libre dans le logement entre les aimants et les petits côtés du logement correspondant. L'espace libre est par exemple de forme générale triangulaire.

La machine peut être à reluctance. Elle peut constituer un moteur synchrone.

La machine peut fonctionner à une vitesse périphérique nominale (vitesse tangentielle prise au diamètre extérieur du rotor) qui peut être supérieure ou égale à 100 mètres par seconde, la machine selon l'invention permettant un fonctionnement à des vitesses importantes si cela est souhaité.

La machine peut avoir une taille relativement grande. Le diamètre du rotor peut être supérieur à 50 mm, mieux supérieur à 80 mm, étant par exemple compris entre 80 et 300 mm.

L'invention a encore pour objet un procédé de fabrication d'un rotor ou d'un stator selon l'invention, tel que défini ci-dessus, dans lequel des cales sont introduites dans la masse magnétique pour réduire les entrefers parasites entre les aimants et la masse magnétique.

L'invention pourra être mieux comprise à la lecture de la description détaillée qui va suivre, d'exemples de mise en œuvre non limitatifs de celle-ci, et à l'examen du dessin annexé, sur lequel :
- la figure 1 est une vue schématique et partielle d'un rotor conforme à l'invention,
- la figure 2 représente un détail de réalisation du rotor de la figure 1,
- la figure 3 est une vue schématique et partielle du rotor de la figure 1 après insertion des cales,
- la figure 4 représente un détail de réalisation rotor de la figure 3, et
- les figures 5 à 8 sont des vues schématiques et partielles, analogues à la figure 2, de variantes de réalisation.

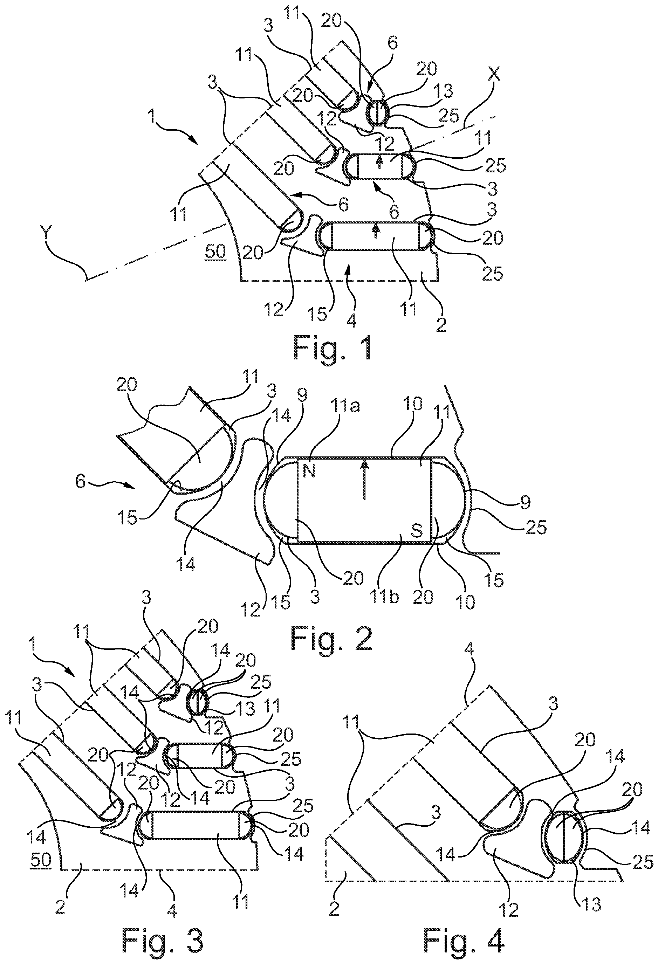

Sur les figures 1 et 2, les cales sont représentées en position avant insertion.

On a illustré aux figures 1 à 4 un rotor 1 de machine électrique tournante, comportant une masse magnétique rotorique 2 à concentration de flux dans laquelle sont ménagés des premiers logements 3, de manière à définir les pôles 4 du rotor, chaque pôle ayant un axe radial X. Seule la moitié d'un pôle 4 est représentée dans l'exemple décrit. La masse magnétique 2 s'étend autour d'un alésage central 50 qui reçoit un arbre, non représenté.

Des aimants permanents 11 sont insérés dans chacun des premiers logements 3, leur direction d'aimantation étant illustrée par des flèches. Chaque aimant permanent 11 comporte deux faces polaires 11a, 11b, l'une aimantée Nord (N) et l'autre Sud (S).

Dans cet exemple, le rotor comporte sept premiers logements 3 par pôle 4, qui sont disposés en trois rangées concentriques 6 autour de chacun des pôles, la concavité des rangées étant orientée vers l'entrefer. Deux rangées 6 comportent trois premiers logements 3 disposés consécutivement dans la rangée, et une rangée 6, la plus proche de l'entrefer, un seul premier logement 3. Les trois rangées 6 d'un même pôle sont de longueur décroissante lorsque l'on se déplace en direction de l'entrefer, la plus longue étant située du côté de l'axe de rotation Y et la plus courte du côté de l'entrefer.

Les aimants permanents sont dans cet exemple de forme générale rectangulaire en section transversale. Les premiers logements 3 sont de forme allongée. Ils comportent chacun deux petits côtés 9 et deux grands côtés 10. La mise en place des aimants 11 dans les premiers logements 3 peut laisser un jeu entre les faces polaires des aimants 11 et les parois du logement correspondant, définies par les grands côtés 10, ainsi que deux espaces libres 15 dans chaque logement entre l'aimant et les petits côtés 9 du logement correspondant. L'espace libre 15 peut être de forme générale en D, comme illustré à la figure 2, ou d'une autre forme. Les petits côtés 9 d'un logement 3 peuvent être rectilignes ou courbes.

La machine électrique comporte des cales amagnétiques 20 en forme de D insérées dans la masse magnétique 2, les cales 20 étant configurées pour provoquer lors de leur insertion une déformation des premiers logements 3 et améliorer le contact entre au moins une face polaire 11a, 11b des aimants permanents 11 et une paroi correspondante 10 des premiers logements 3 dans lesquels les aimants sont insérés.

Dans l'exemple décrit, chaque premier logement 3 comporte deux cales 20, chacune placée de part et d'autre de l'aimant 11. Les cales 20 sont insérées le long de faces non polaires de l'aimant, perpendiculaires aux faces polaires 11a, 11b de ce dernier.

La machine électrique peut comporter en outre, comme illustré, des seconds logements 13 et des troisièmes logements 12 dépourvus d'aimants permanents. Certains troisièmes logements 12 sont, dans l'exemple décrit, disposés dans une rangée 6 de logements entre deux premiers logements 3, et sont alors vides, c'est-à-dire dépourvus d'aimant permanent et de cales, comme illustré sur les figures 2 et 4. Certains seconds logements 13 sont disposés entre un troisième logement 12 vide et l'entrefer, étant alors destinés à recevoir une cale 20, comme on peut le voir aux figures 3 et 4, au niveau de la rangée la plus proche de l'entrefer.

Les troisièmes logements vides 12 définissent avec un logement consécutif 3 ou 13 recevant une cale 20 d'une même rangée 6 un pont de matière 14. Les ponts de matière 14 se déforment lors de l'insertion des cales 20 dans les logements de la masse magnétique 2, que ce soit dans les premiers 3 ou les seconds ou les troisièmes logements 12, 13, provoquant ainsi la déformation des premiers logements 3 qui reçoivent les aimants 11. En particulier, les logements 3 voient leurs grands côtés se rapprocher légèrement du fait de la poussée exercée dans des directions opposées sur les petits côtés par les cales 20. Sur les figures 3 et 4, on a fait apparaître en grisé le contour de la masse magnétique après déformations induites par les cales.

La masse magnétique 2 présente une section transversale de forme extérieure générale circulaire comportant des découpes 25 sur son pourtour au niveau des logements 3, 13, lesquelles aident à compenser la déformation des logements et des ponts de matière 14 entre les logements.

Les cales 20 peuvent avoir, en section transversale, une forme qui peut être autre qu'une forme de D, étant par exemple trapézoïdale ou circulaire.

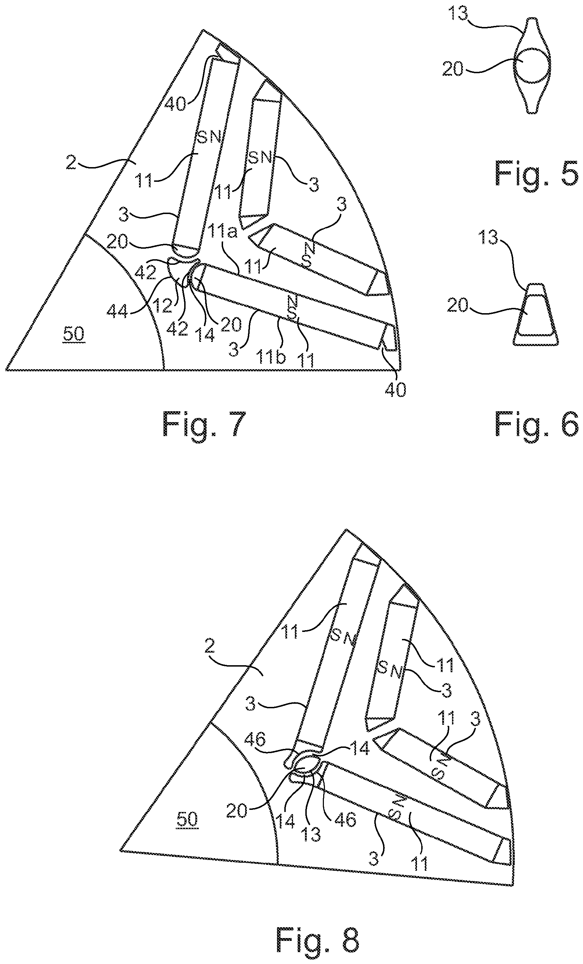

A titre d'exemple, on a illustré à la figure 5 un exemple de réalisation dans lequel les cales 20 de section transversale circulaire sont introduites dans des seconds logements 13 de forme générale en section transversale aplatie avant déformation. Les seconds logements 13 peuvent être disposés entre deux premiers logements 3 dépourvus de cales.

Les cales 20 peuvent en variante encore être de forme générale en section transversale prismatique, comme illustré à la figure 6. Le second logement 13 est alors de forme générale en section transversale également prismatique avant déformation. La forme prismatique des cales 20 permet leur coincement radial après leur insertion, par déplacement dans le plan de la tôle, de préférence en direction de l'extérieur du rotor.

La machine électrique peut en variante encore être dépourvue de second logement et ne comporter que des premiers logements 3 dans lesquels sont insérés des aimants permanents 11. Des cales 20 peuvent être insérées dans certains ou dans tous ces premiers logements 3.

Dans l'exemple des figures 7 et 8, les logements 3 destinés à recevoir les aimants 11 présentent un agencement en V, avec par exemple deux rangées d'aimants 11 comme illustré.

Les logements 3 recevant les aimants 11 de plus grande dimension comportent dans l'exemple de la figure 7 un décrochement 40 qui sert de butée pour l'aimant 11 correspondant. La forme du logement s'étendant entre les logements 3 qui reçoivent les aimants 11 de plus grande longueur diffère entre les variantes des figures 7 et 8.

Dans l'exemple de la figure 7, le troisième logement 12 présente deux bords circulaires opposés 42 qui délimitent avec les logements 3 adjacents des ponts de matière 14 de largeur sensiblement constante. Les bords 42 sont reliés par un bord 44 concave vers l'extérieur.

Deux cales 20 en forme de D sont introduites dans les logements 3 à côté dudit logement 12.

Dans l'exemple de la figure 8, le logement recevant la cale 20 présente une forme lenticulaire, définissant avec les logements 3 adjacents des ponts de matière 14 de largeur sensiblement constante. Les logements 3 adjacents à ce logement présentent des bords 46 concaves vers ce logement. La cale 20 présente une forme ovoïde. Dans les exemples des figures 7 et 8, les cales sont introduites parallèlement à l'axe de rotation du rotor.

L'invention n'est pas limitée aux exemples illustrés. On peut notamment modifier la polarité du rotor sans sortir du cadre de la présente invention.

Le rotor peut coopérer avec tout type de stator, à bobinage distribué ou concentré.

La masse magnétique 2 peut bien entendu comporter une seule rangée 6 de logements 3, 12, 13 par pôle 4.

Les logements 3, 12, 13 peuvent s'étendre chacun selon un axe longitudinal qui peut être rectiligne, comme illustré précédemment, ou courbe.

Sur les figures 1 à 4, les seconds logements 13 reçoivent chacun deux cales qui regroupées ont une section ovoïde. En variante, lesdits logements 13 reçoivent chacun une cale unique, par exemple de section ovoïde.

L'expression « comportant un » doit être comprise comme étant synonyme de « comportant au moins un ».

## Revendications

1. Machine électrique tournante comportant :
- une masse magnétique (2), notamment rotorique, comportant des premiers logements (3),
- une pluralité d'aimants permanents (11) insérés dans les premiers logements (3), chaque aimant permanent présentant deux faces polaires (11a, 11b), et
- des cales (20), notamment amagnétiques, insérées dans les premiers logements (3) et/ou dans des seconds logements (13) ménagés dans la masse magnétique (2),
les cales (20) étant configurées pour provoquer une déformation des premiers logements (3) diminuant l'entrefer parasite entre au moins une face polaire (11a, 11b) d'un aimant permanent (11) et une paroi correspondante d'un premier logement (3),
la masse magnétique (2) comportant des ponts de matière (14) ménagés entre deux logements consécutifs dans une rangée (6) de logements, **caractérisé en ce que** les cales (20) venant au contact de ces ponts de matière (14), au moins un pont de matière (14) étant de forme générale incurvée.

2. Machine électrique selon la revendication précédente, dans laquelle la masse magnétique (2) est formée d'un empilement de tôles magnétiques, de préférence chacune monobloc.

3. Machine électrique selon l'une quelconque des revendications précédentes, dans laquelle des cales (20) sont insérées dans les premiers logements (3).

4. Machine électrique selon l'une quelconque des revendications précédentes, dans laquelle deux cales (20) sont insérées chacune de part et d'autre d'un aimant (11) dans un premier logement (3) logeant l'aimant correspondant.

5. Machine électrique selon l'une quelconque des revendications précédentes, dans laquelle des cales (20) sont insérées dans des seconds logements (13) dépourvus d'aimants permanents.

6. Machine électrique selon la revendication précédente, dans laquelle des cales (20) sont insérées dans des seconds logements (13) disposés entre deux premiers logements (3) consécutifs dans une rangée (6) de logements, des aimants permanents (11) étant insérés dans au moins l'un de ces premiers logements (3), voire dans les deux.

7. Machine électrique selon l'une quelconque des revendications 1 à 4, étant dépourvue de seconds logements (13) et ne comportant que des premiers logements (3) dans lesquels sont insérés des aimants permanents (11).

8. Machine électrique selon l'une quelconque des revendications précédentes, dans laquelle les cales (20) ont, en section transversale, une forme choisie dans la liste suivante : trapézoïdale, circulaire, en forme de D.

9. Machine électrique selon l'une quelconque des revendications précédentes, les logements (3, 12, 13) étant disposés en rangées (6) de logements de manière à définir les pôles (4) de la masse magnétique (2).

10. Machine selon l'une quelconque des revendications précédentes, la masse magnétique présentant à sa périphérie des découpes (25) délimitées au moins partiellement par des ponts de matière (14) venant au contact de cales (20).

11. Machine selon l'une quelconque des revendications 1 à 12, comportant des troisième logements (12) vides d'aimants et de cales, disposés entre deux logements (3, 13) consécutifs recevant des aimants (11), les troisième logements (12) étant de préférence délimités au moins partiellement par deux ponts de matière (14) opposés, chacun en contact avec une cale (20).

12. Machine selon l'une quelconque des revendications précédentes, comportant des premiers logements (3) recevant des aimants (11) et des cales (20) et des seconds logements (13) recevant des cales uniquement, ces seconds logements (13) étant délimités au moins partiellement par des ponts de matière (14) définissant au moins partiellement le contour extérieur de la masse magnétique, des troisième logements (12) sans cales ni aimants étant disposés entre les premiers logements (3) avec aimants (11) et cales (20) et les seconds logements (13) avec cales (20) uniquement.

13. Machine électrique selon l'une quelconque des revendications précédentes, la masse magnétique (2) étant une masse rotorique.

## Patentansprüche

1. Drehende elektrische Maschine, die umfasst:
- eine magnetische Masse (2), insbesondere Rotormasse, die erste Aufnahmen (3) umfasst,
- mehrere Permanentmagnete (11), die in die ersten Aufnahmen (3) eingesetzt sind, wobei jeder Permanentmagnet zwei Polseiten (11a, 11b) aufweist, und
- Keile (20), insbesondere unmagnetische, die in die ersten Aufnahmen (3) und/oder in zweite Aufnahmen (13), die in der magnetischen Masse (2) ausgebildet sind, eingesetzt sind,
wobei die Keile (20) dazu ausgestaltet sind, eine Verformung der ersten Aufnahmen (3) zu bewirken, die den Stör-Luftspalt zwischen mindestens einer Polseite (11a, 11b) eines Permanentmagneten (11) und einer entsprechenden Wand einer ersten Aufnahme (3) verringert,
wobei die magnetische Masse (2) Materialbrücken (14) umfasst, die zwischen zwei aufeinander folgenden Aufnahmen in einer Reihe (6) von Aufnahmen ausgebildet sind, wobei die Keile (20) mit diesen Materialbrücken (14) in Kontakt gelangen, wobei mindestens eine Materialbrücke (14) eine gekrümmte Grundform hat.

2. Elektrische Maschine nach dem vorhergehenden Anspruch, bei der die magnetische Masse (2) aus einem Stapel von Magnetblechen gebildet ist, von denen bevorzugt jedes einstückig ist.

3. Elektrische Maschine nach einem der vorhergehenden Ansprüche, bei der Keile (20) in die ersten Aufnahmen (3) eingesetzt sind.

4. Elektrische Maschine nach einem der vorhergehenden Ansprüche, bei der zwei Keile (20) jeweils beidseits eines Magneten (11) in eine erste Aufnahme (3) eingesetzt sind, die den entsprechenden Magneten aufnimmt.

5. Elektrische Maschine nach einem der vorhergehenden Ansprüche, bei der Keile (20) in zweite Aufnahmen (13) eingesetzt sind, die keine Magnete aufweisen.

6. Elektrische Maschine nach dem vorhergehenden Anspruch, bei der Keile (20) in zweite Aufnahmen (13) eingesetzt sind, die zwischen zwei aufeinander folgenden ersten Aufnahmen (3) in einer Reihe (6) von Aufnahmen angeordnet sind, wobei Permanentmagnete (11) in mindestens eine dieser ersten Aufnahmen (3) oder sogar in beide eingesetzt sind.

7. Elektrische Maschine nach einem der Ansprüche 1 bis 4, die keine zweiten Aufnahmen (13) aufweist und nur erste Aufnahmen (3) umfasst, in die Permanentmagnete (11) eingesetzt sind.

8. Elektrische Maschine nach einem der vorhergehenden Ansprüche, bei der die Keile (20) im Querschnitt eine Form haben, die aus der folgenden Liste gewählt ist: trapezförmig, kreisförmig, D-förmig.

9. Elektrische Maschine nach einem der vorhergehenden Ansprüche, bei der die Aufnahmen (3, 12, 13) in Reihen (6) von Aufnahmen derart angeordnet sind, dass sie die Pole (4) der magnetischen Masse (2) definieren.

10. Maschine nach einem der vorhergehenden Ansprüche, wobei die magnetische Masse an ihrem Umfang Ausschnitte (25) aufweist, die zumindest teilweise durch Materialbrücken (14) begrenzt werden, die mit Keilen (20) in Kontakt gelangen.

11. Maschine nach einem der Ansprüche 1 bis 12, die dritte Aufnahmen (12) ohne Magnete und Keile umfasst, die zwischen zwei aufeinander folgenden, Magnete (11) aufnehmenden Aufnahmen (3, 13) angeordnet sind, wobei die dritten Aufnahmen (12) bevorzugt zumindest teilweise durch zwei entgegengesetzte Materialbrücken (14) begrenzt werden, die jeweils mit einem Keil (20) in Kontakt sind.

12. Maschine nach einem der vorhergehenden Ansprüche, die erste Aufnahmen (3) umfasst, die Magnete (11) und Keile (20) aufnehmen, und zweite Aufnahmen (13), die nur Keile aufnehmen, wobei diese zweiten Aufnahmen (13) zumindest teilweise durch Materialbrücken (14) begrenzt werden, die zumindest teilweise die äußere Kontur der magnetischen Masse definieren, wobei dritte Aufnahmen (12) ohne Keile und Magnete zwischen den ersten Aufnahmen (3) mit Magneten (11) und Keilen (20) und den zweiten Aufnahmen (13) mit nur Keilen (20) angeordnet sind.

13. Elektrische Maschine nach einem der vorhergehenden Ansprüche, wobei die magnetische Masse (2) eine Rotormasse ist.

## Claims

1. A rotating electric machine, having:
- a magnetic mass (2), in particular a rotor magnetic mass, having first seats (3),
- a plurality of permanent magnets (11) inserted into the first seats (3), each permanent magnet having two polar faces (11a, 11b), and
- shims (20), in particular non-magnetic, inserted into the first seats (3) and/or into second seats (13) formed in the magnetic mass (2),
the shims (20) being configured to cause a deformation of the first seats (3) reducing the parasitic air gap between at least one polar face (11a, 11b) of a permanent magnet (11) and a corresponding wall of a first seat (3),
the magnetic mass (2) having material bridges (14) formed between two consecutive seats within a row (6) of seats, wherein the shims (20) coming into contact with these material bridges (14), at least one material bridge (14) being of curved general shape.

2. The electric machine as claimed in the preceding claim, wherein the magnetic mass (2) is formed of a stack of magnetic sheets, each preferably being a one-piece sheet.

3. The electric machine as claimed in any one of the preceding claims, wherein shims (20) are inserted into the first seats (3).

4. The electric machine as claimed in any one of the preceding claims, wherein two shims (20) are inserted one on either side of a magnet (11) into a first seat (3) accommodating the corresponding magnet.

5. The electric machine as claimed in any one of the preceding claims, wherein shims (20) are inserted into second seats (13) devoid of permanent magnets.

6. The electric machine as claimed in the preceding claim, wherein shims (20) are inserted into second seats (13) disposed between two consecutive first seats (3) in a row (6) of seats, permanent magnets (11) being inserted into at least one of these first seats (3), or even into both of said seats.

7. The electric machine as claimed in any one of the preceding claims 1 to 4, being devoid of second seats (13) and having only first seats (3) in which permanent magnets (11) are inserted.

8. The electric machine as claimed in any one of the preceding claims, wherein the shims (2), in cross section, have a shape selected from the following list: trapezoidal, circular, D-shaped.

9. The electric machine as claimed in any one of the preceding claims, the seats (3, 12, 13) being disposed in rows (6) of seats so as to define the poles (4) of the magnetic mass (2).

10. The machine as claimed in any one of the preceding claims, the magnetic mass having, at the periphery thereof, cutouts (25) delimited at least in part by material bridges (14) coming into contact with shims (20).

11. The machine as claimed in any one of claims 1 to 12, having third seats (12) devoid of magnets and shims, disposed between two consecutive seats (3, 13) receiving magnets (11), the third seats (12) preferably being delimited at least in part by two opposite material bridges (14), each in contact with a shim (20).

12. The machine as claimed in any one of the preceding claims, having first seats (3) receiving magnets (11) and shims (20) and second seats (13) receiving only shims, these second seats (13) being delimited at least in part by material bridges (14) defining the outer contour of the magnetic mass at least in part, third seats (12) with neither shims nor magnets being disposed between the first seats (3) with magnets (11) and shims (20) and the second seats (13) with only shims (20).

13. The electric machine as claimed in any one of the preceding claims, the magnetic mass (2) being a rotor mass.
